Europäisches Patentamt

European Patent Office

Office européen des brevets

(11) Veröffentlichungsnummer: **0 484 744 A2**

# EUROPÄISCHE PATENTANMELDUNG

(21) Anmeldenummer: **91118076.8**

(51) Int. Cl.5: **G02B 6/44**

(22) Anmeldetag: **23.10.91**

(30) Priorität: **06.11.90 DE 4035243**

(43) Veröffentlichungstag der Anmeldung:
**13.05.92 Patentblatt 92/20**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**W-8000 München 2(DE)**

(72) Erfinder: **Ettenberger, Gisela**
**Zum Künstlerhof 7**
**W-8000 München 19(DE)**
Erfinder: **Weber, Günther, Dipl.-Ing. (FH)**
**Brunnsteinweg 7**
**W-8269 Burgkirchen(DE)**
Erfinder: **Saller, Helmut**
**Diemendorfer Strasse 8**
**W-8000 München 71(DE)**

(54) **Gefülltes optisches Kabel oder optische Ader.**

(57) Das optische Kabel (OC) oder die gefüllte optische Ader (OA) weist eine Füllmasse (FC) auf, die ein Öl sowie mindestens ein halogenfreies Flammschutzmittel enthält.

FIG 1

Die Erfindung betrifft ein gefülltes optisches Kabel oder eine gefüllte optische Ader mit einer Füllmasse, die mindestens ein Öl enthält.

Derartige Füllmassen, welche eine schonende und weiche Einbettung der Lichtwellenleiter ermöglichen sind z.B. in der EP-PS 00 29 198 beschrieben. Der Flammpunkt derartiger, insbesondere auf Kohlenwasserstoffölen basierender Füllmassen ist Zwar relativ hoch (über 240° C); im Falle eines Kabelbrandes mit weit höheren Temparaturen unterstützt jedoch die vergasende Füllmasse bzw. austropfende brennende Füllmasse den Brand in ganz erheblichen Maße.

Aus der DE-0S 35 04 041 ist ein optisches Kabel für Hochspannungsfreileitungen bekannt, dessen Außenmantel aus einem nicht brennbaren Kunststoff besteht, in den als Zusatz, z.B. Aluminiumhydroxid eingelagert ist. Dadurch lassen sich störende Einflüsse von Überschlägen oder Kriechstrombeanspruchungen zwar weitgehend ausschalten; ein entsprechend schwer entflammbares und von der Füllmasse her nicht brandförderndes Verhalten wird dadurch jedoch nicht erreicht.

Der Erfindung liegt die Aufgabe zugrunde, ein schwer entflammbares, nicht brandförderndes optisches Kabel oder eine gefüllte optische Ader zu schaffen, wobei gleichzeitig teure halogenhaltige Spezialwerkstoffe im Kabelverbund selbst eingespart werden sollen.

Gemäß der Erfindung wird diese Aufgabe bei einem optischen Kabel oder einer gefüllten optischen Ader ausgehend von einer Füllmasse, die mindestens ein Öl enthält, dadurch erreicht, daß der Füllmasse zusätzlich mindestens ein halogenfreies Flammschutzmittel zugefügt ist.

Durch die Erfindung wird somit durch den Einsatz halogenfreier und damit weniger teurer Werkstoffe ein Kabel geschaffen, das die Brandtests besteht. Im Brandfall werden darüber hinaus auch keine unerwünschten oder schädlichen Stoffe abgeschieden, wie dies bei Verwendung halogenhaltiger Werkstoffe der Fall sein kann. Der störende Einfluß und die Gefahr der Brandweiterleitung durch die vergasenden Ader- oder Seelenfüllmassen von Lichtwellenleiteradern oder optischen Kabeln ist bei der Erfindung vermieden.

Gemäß einer bevorzugten Weiterbildung der Erfindung besteht das Öl der Füllmasse aus einem Kohlenwasserstofföl, oder einem Silikonöl oder einem Polypropylen-Glykol oder einem Esteröl. Es ist auch möglich, Mischungen dieser Stoffe als Ölanteil der Füllmasse zu benutzen.

In vielen Fällen kann es zweckmäßig sein, einen organischen Verdicker vorzusehen (wie beispielsweise in der EP-PS 00 29 198 näher erläutert). Derartige organische Verdicker können unter anderem vorteilhaft bestehen aus einem organischen Kohlenwasserstoff-Polymer oder einem Kohlenwasserstoff-Copolymer. Bevorzugt zu verwenden sind hochmolekulare Polybutene oder Polyisobutylene. Das Molekulargewicht dieser Substanzen sollte zweckmäßig über 10000 gewählt werden. Als Verdickungsmittel sind weiterhin vorteilhaft Styrolbutadien-Copolymere einsetzbar.

Für den Einsatz als halogenfreies Flammschutzmittel sind bevorzugt folgende Stoffe geeignet:

Magnesiumhydroxid (Vorteil:     Abspaltung von Wasser bei > 180° C)
Aluminiumtrihydrad (Vorteil:     Abspaltung von Wasser bei > 180° C)
Melaminverbindungen (Vorteil:     Abspaltung von nicht brennbaren Gasen ($N_2$) und Bildung einer "Glasschicht", d.h. abschichten des noch brennbaren Materials gegen Luft

In diesem Zusammenhang sind besonders geeignet Melaminborat, Melamincyanurat oder Melaminphosphat. Diese Stoffe haben den Vorteil, daß eine starke Gasabspaltung ($N_2$) einhergeht mit einer glasbildenden Schicht und geringer Toxizität.

Es ist auch möglich, als halogenfreies Flammschutzmittel Stickstoff- oder Phosphorverbindungen mit synergistischen Wirkungen einzusetzen. Unter synergistischen Wirkung ist in diesem Zusammenhang die Kombination von Energieverbrauch durch Bildung neuer Verbindungen, die Gasabspaltung und die Glasbildung zu verstehen. In diesem Zusammenhang kann z.B. die Substanz "CP-Flam" der Firma Nordmann & Rassmann eingesetzt werden.

Die vorgenannten halogenfreien Flammschutzmittel können einzeln oder in Kombination eingesetzt werden. Die Korngröße dieser Flammschutzmittel sollte unter 100 $\mu$m vorzugsweise unter 10 $\mu$m liegen.

Die vorstehend genannten Flammschutzmittel beeinträchtigen die weiche Einbettung der Lichtwellenleiterfasern und deren schonende Behandlung nicht, weil die Flammschutzpartikel umgeben sind mit einer sehr weichen Füllmassenschicht, welche aufgrund ihres teil-elastischen Verhaltens jeden Druck seitens der Faser abbaut. Außerdem haben die Flammschutzpartikel nur Füllstoffcharakter, so daß der Lichtwellenleiter zwischen ihnen hindurchgleiten kann.

In vielen Fällen kann es zweckmäßig sein, der Füllmasse mindestens ein Antioxidant zuzusetzen, wofür die in der Kabeltechnik üblichen Stoffe, wie z.B. sterisch gehinderte Phenole mit Vorteil eingesetzt werden können.

Vielfach ist es zweckmäßig, in die Füllmasse auch ein Thixotropierungsmittel einzufügen, insbesondere z.B. eine amorphe Kieselsäure bzw. Stoffe auf der Basis von $SIO_2$. In diesem Zusammenhang sind insbesondere hydrophobe Typen mit einer größeren spezifischen Oberfläche mit Vorteil einsetzbar. Die Oberfläche sollte zweckmäßig über 100 $m^2$/g liegen.

Eine besonders zweckmäßig zusammengesetzte Füllmasse gemäß der Erfindung enthält somit ein Öl, ein organisches Verdickungsmittel, ein halogenfreies Flammschutzmittel sowei gegebenenfalls ein Antioxidant und ein Thixotropierungsmittel, z.B. in Form amorpher Kieselsäure. Für die erfindungsgemäße Füllmasse wird nachfolgend ein Rezepturbeispiel mit Konzentrationsgrenzen angegeben:

| Komponente | Grenzkonzentrationen *) Gew. % | | Beispiel Gew. % |
|---|---|---|---|
| | min. | max. | |
| Öl | 30 | 60 | 50,4 |
| org. Verdicker | 4 | 40 | 9 |
| Flammschutzm. | 20 | 60 | |
| z.B. "CP-Flam" | | | 40 |
| Antioxidant | 0 | 1 | 0,6 |
| am. Kieselsäure | 0 | 10 | 0 |

*) Werte voneinander unabhängig

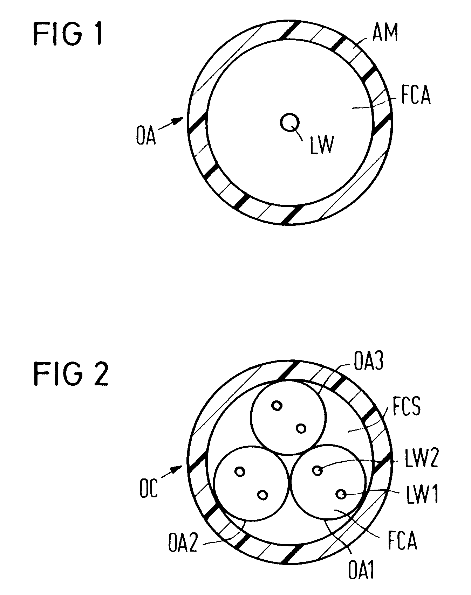

Eine gefüllte Lichtwellenleiterader entsprechend Fig. 1 mit einem Außenmantel aus Polyamid bzw. Polycarbonat und einer Füllmasse entsprechend dem vorstehend genannten Beispiel erlischt bei einer Prüfung analog VDE 0472 Teil 804/Prüfflamme B (Beflammzeit = 20 sec. ) nach ca. 35 sec. Eine analoge gefüllte Lichtwellenleiterader die mit einer üblichen Füllmasse versehen ist, brennt unter denselben Bedingungen bis zum Ende ab und zwar innerhalb von etwa 90 sec.

In Fig. 1 ist im Querschnitt eine Lichtwellenleiterader dargestellt, die einen Außenmantel AM, z.B. aus Polyethylen (gegebenenfalls mehrschichtig) aufweist. Im Inneren ist mindestens ein Lichtwellenleiter LW vorgesehen, der weich in eine entsprechende Füllmasse FCA eingebettet ist. Die so erhaltene optische Lichtwellenleiterader OA kann als Verseilelement Verwendung finden oder den Kern eines einfachen optischen Kabels bilden.

In Fig. 2 ist in schematischer Darstellung ein mehradriges optisches Kabel OC dargestellt, welches drei Lichtwellenleiteradern OA1, OA2 und OA3 aufweist, die vorteilhaft miteinander verseilt sind. Innerhalb der Lichtwellenleiteradern OA1 bis OA3 können ein oder mehrere Lichtwellenleiter untergebracht sein (z.B. Lichtwellenleiter LW1 und LW2). Als Aderfüllmasse innerhalb der Adern OA1 bis OA3 ist eine Füllmasse FCA vorgesehen und auch in den Zwickeln zwischen den einzelnen Adern eine weitere Füllmasse (Seelenfüllmasse) vorhanden die mit FCS bezeichnet ist. Für beide Füllmassen werden zweckmäßig die vorstehend beschrieben Substanzen verwendet, welche Zusätze von mindestens einem halogenfreien Flammschutzmittel aufweisen.

Eine weitere Art, in der eine schwer entflammbare und nicht brandfördernde halogenfreie Füllmasse hergestellt werden kann besteht erfindungsgemäß darin, eine Zweikomponenten-Füllmasse vorzusehen, die aus einem, vorzugsweise additionsvernetzten, Silikonharz und einem oder mehreren der vorstehend genannten Flammschutzmittel besteht. Es wird somit bei dieser Ausführungsform das Öl durch das vernetzte Silikonharz ersetzt, wobei eventuell für dieses Katalysatoren und/oder Inhibitoren vorgesehen sein können. Die notwendige Konzentration des Flammschutzmittels beträgt mindestens 20 Gew. % und höchstens 60 Gew. %. Ein vorteilhafter Wert liegt bei etwa 40 gew. %, der Rest entfällt im wesentlichen auf das Silikonharz.

Für die Füllmasse auf der Basis von Silikonharz wird nachfolgend ein Rezepturbeispiel mit Konzentrationsgrenzen angegeben:

| Komponente | Grenzkonzentration *) Gew. % | | Beispiel Gew. % |
|---|---|---|---|
| | min. | max. | |
| Silikonharz **) Komp.A | 32 | 21 | 29,9 |
| Silikonharz **) Komp.B | 48 | 15 | 29,9 |
| Flammschutzmittel | 20 | 60 | 40 |
| Katalysator | 0 | 2 | 0,1 |
| Inhibitor | 0 | 2 | 0,1 |

*) Werte voneinander unabhängig

**) Z.B. von der Fa. Wacker "RTV 612", wobei die Komponente A eine Vinylverbindung und die Komponente B eine Silanverbindung darstellt.

**Patentansprüche**

1. Gefülltes optisches Kabel (OC) oder gefüllte optische Ader (OA) mit einer Füllmasse (FCA, FCS), die mindestens ein Öl enthält,
   **dadurch gekennzeichnet,**
   daß der Füllmasse (FCA, FCS) zusätzlich mindestens ein halogenfreies Flammschutzmittel zugefügt ist.

2. Gefülltes optisches Kabel nach Anspruch 1,
   **dadurch gekennzeichnet,**
   daß als halogenfreies Flammschutzmittel Magnesiumhydroxid verwendet ist.

3. Gefülltes optisches Kabel nach einem der vorhergehenden Ansprüche,
   **dadurch gekennzeichnet,**
   daß als halogenfreies Flammschutzmittel Aluminiumtrihydrat verwendet ist.

4. Gefülltes optisches Kabel nach einem der vorhergehenden Ansprüche,
   **dadurch gekennzeichnet,**
   daß als halogenfreies Flammschutzmittel eine Melaminverbindung verwendet ist.

5. Gefülltes optisches Kabel nach Anspruch 4,
   **dadurch gekennzeichnet,**
   daß als Melaminverbindung die Melaminphosphat oder Melaminborat, Melamincyanurat oder Melaminphosphat verwendet ist.

6. Gefülltes optisches Kabel nach einem der vorhergehenden Ansprüche,
   **dadurch gekennzeichnet,**
   daß als halogenfreies Flammschutzmittel Stickstoff- oder Phosphorverbindungen mit synergistischer Wirkung verwendet sind.

7. Gefülltes optisches Kabel nach einem der vorhergehenden Ansprüche,
   **dadurch gekennzeichnet,**
   daß die Korngröße des Flammschutzmittels unter 100 $\mu$m, vorzugsweise unter 10 $\mu$m gewählt ist.

**8.** Gefülltes optisches Kabel nach einem der vorhergehenden Ansprüche,
**dadurch gekennzeichnet,**
daß der Füllmasse (FCA, FCS) zusätzlich ein organisches Verdickungsmittel hinzugefügt ist.

**9.** Gefülltes optisches Kabel nach Anspruch 8,
**dadurch gekennzeichnet,**
daß das organische Verdickungsmittel ein organisches Kohlenwasserstoffpolymer/oder -Copolymer ist.

**10.** Gefülltes optisches Kabel nach Anspruch 9,
**dadurch gekennzeichnet,**
daß das organische Verdickungsmittel aus einem Polybutene/oder Polyisobutylene besteht.

**11.** Gefülltes optisches Kabel nach den Ansprüchen 8 bis 10,
**dadurch gekennzeichnet,**
daß das Molekulargewicht des organischen Verdickungsmittels über 10000 gewählt ist.

**12.** Gefülltes optisches Kabel nach den Ansprüchen 8 bis 11,
**dadurch gekennzeichnet,**
daß als organisches Verdickungsmittel ein Styrolbutadien-Copolymere verwendet ist.

**13.** Gefülltes optisches Kabel nach einem der Ansprüche 8 bis 12,
**dadurch gekennzeichnet,**
daß das organische Verdickungsmittel zwischen 4 und 40 Gewichtsprozent der Füllmasse beträgt.

**14.** Gefülltes optisches Kabel nach einem der vorhergehenden Ansprüche,
**dadurch gekennzeichnet,**
daß der Füllmasse (FCA, FCS) zusätzlich Antioxidantien hinzugesetzt sind, insbesondere sterisch gehinderte Phenole.

**15.** Gefülltes optisches Kabel nach Anspruch 14,
**dadurch gekennzeichnet,**
daß die Antioxidantien zwischen 0 und 1 Gewichtsprozent der Füllmasse betragen.

**16.** Gefülltes optisches Kabel nach einem der vorhergehenden Ansprüche,
**dadurch gekennzeichnet,**
daß der Füllmasse (FCA, FCS) ein Thixotropierungsmittel zugesetzt ist.

**17.** Gefülltes optisches Kabel nach Anspruch 16,
**dadurch gekennzeichnet,**
daß als Thixotropierungsmittel amorphe Kieselsäure verwendet ist.

**18.** Gefülltes optisches Kabel nach den Ansprüchen 16 und 17,
**dadurch gekennzeichnet,**
daß die spezifische Oberfläche des Thixotropierungsmittel größer als 100 $m^2$/g gewählt ist.

**19.** Gefülltes optisches Kabel nach einem der Ansprüche 16 bis 18,
**dadurch gekennzeichnet,**
daß das Thixotropierungsmittel zwischen 0 und 10 Gewichtsprozent der Füllmasse beträgt.

**20.** Gefülltes optisches Kabel nach einem der vorhergehenden Ansprüche,
**dadurch gekennzeichnet,**
daß als Öl ein Kohlenwasserstofföl verwendet ist.

**21.** Gefülltes optisches Kabel nach einem der vorhergehenden Ansprüche,
**dadurch gekennzeichnet,**
daß als Öl ein Silikonöl verwendet ist.

5

**22.** Gefülltes optisches Kabel nach den vorhergehenden Ansprüchen 20 und 21,
**dadurch gekennzeichnet,**
daß als Öl ein Polypropylenglykol verwendet ist.

**23.** Gefülltes optisches Kabel nach den vorhergehenden Ansprüchen 20 bis 22,
**dadurch gekennzeichnet,**
daß als Öl ein Esteröl verwendet ist.

**24.** Gefülltes optisches Kabel nach einem der vorhergehenden Ansprüche,
**dadurch gekennzeichnet,**
daß der Ölanteil zwischen 30 und 60 Gewichtsprozent der Füllmasse beträgt.

**25.** Gefülltes optisches Kabel (OC) oder gefüllte optische Ader (OA) mit einer Füllmasse (FCA, FCO),
**dadurch gekennzeichnet,**
daß die Füllmasse (FCA, FCO) eine zwei Komponenten-Silikonharzmischung und ein halogenfreies Flammschutzmittel enthält.

**26.** Gefülltes optisches Kabel nach einem der vorhergehenden Ansprüche,
**dadurch gekennzeichnet,**
daß das Flammschutzmittel zwischen 20 und 60 Gewichtsprozent der Füllmasse ausmacht.

FIG 1

AM

FCA

OA

Q
LW

FIG 2

OA3

FCS

LW2

LW1

OC

OA2

FCA

OA1